Europäisches Patentamt

European Patent Office

Office européen des brevets

(11) Publication number: **0 245 010**
A2

(12) **EUROPEAN PATENT APPLICATION**

(21) Application number: **87303787.3**

(22) Date of filing: **29.04.87**

(51) Int. Cl.⁴: **G 01 J 5/04**

(30) Priority: **30.04.86 CS 3179/86**

(43) Date of publication of application: **11.11.87**
**Bulletin 87/46**

(84) Designated Contracting States: **BE DE FR GB IT NL SE**

(71) Applicant: **Poldi Spojene Ocelarny, Narodni Podnik, Kladno (CS)**

(72) Inventor: **Hendrich, Rudolf, No 2645, Kladno 2 (CS)**
Inventor: **Bartos, Jiri, No 2550, Okr 3, Kladno 2 (CS)**

(74) Representative: **Wotherspoon, Graham et al, FITZPATRICKS 4 West Regent Street, Glasgow G2 1RS Scotland (GB)**

(54) **Submersible probe for a single measurement of the temperature of molten metal.**

(57) The invention relates to a submersible probe for a single measurement of the temperature of molten metal covered with a layer of semiliquid or liquid slag.

Said probe consists of a front part (3) and of an internal part (9) supported by a supporting mantle (4), the front part (3) being connected exchangeably with said supporting mantle (4), with a cylindrical or tube shaped radiation transmitter (5) supported by said front part (3), the internal part (9) provided behind the radiation transmitter (5) comprising an apertured screen (6) and a holder (14) of a detector (7) of radiation, for instance in this form of a photodiode, connected by conductors (8) with an evaluation device.

The submersible probe can be used for measuring of the temperature of all kinds of melts, particularly of steel melts in the steel and foundry industry.

"Submersible probe for a single measurement of the temperature of molten metals"

The present invention relates to a submersible probe for a single measurement of the temperature of molten metals, which metals are covered by a layer of semiliquid or liquid slag.

With the development of science and technology, application of calculating systems, automatic systems for control of technological processes and similar improvements, requirements in the manufacture of metals and high grade steels are constantly increasing with regard to the yield of material, quality, reduction of energy consumption and increase of life time of manufacturing aggregates. In order to meet said demands, it is necessary to have reliable informations about the course of metallurgical processes which would enable instantaneous interventions into the manufacturing process, creating thus conditions for a dynamic control of the process.

One of the main requirements in the manufacture of metals, particularly of steel, is the knowledge of the temperature of the melt in the course of the most important manufacturing phases from the start of melting up to casting. A number of measuring systems have been developed for this purpose, for instance different kinds of thermoelements and thermoprobes. These systems used expensive and precious metals, required frequent calibration and expert maintenance and the devices used in these systems were costly. There are other known optical arrangements or radiation pyrometers (for instance according to the GB patent specification No.2 119 925 or French patent specification No. 2 514 894) where the temperature at the surface of bodies is measured with a reduced accuracy because the measurement is influenced by dust in the atmosphere, by vapors and by variations of streams of gases in the course of the performed measurement. In another known arrangement described in the Czechoslovak certificate of authorship of an invention No. 234 112 a contamination of a sight opening takes place in the course of measurement causing a distortion of the measuring results.

- 2 -                                        0245010

It is an object of the present invention to obviate or mitigate the above disadvantages.  This object is met in the present invention by the submersible probe comprising a mantle supporting a front part of the probe with an elongated radiation transmitter and with covering means, said front part of the probe being connected exchangeably with said supporting mantle, said mantle additionally supporting an internal part arranged behind said radiation transmitter, said internal part comprising an apertured screen and a holder for a radiation detector, for example a photodiode, conductors leading from said detector for the transmission of a measure signal to evaluating means.  The radiation transmitter can have the form of a cylindrical body with a dull surface in a cross section, capable of withstanding without change of optical properties and without mechanical damage sudden changes of temperature up to 2000°C, and can be made for example of molten quartz or heat resistant glass.  At least two covering parts are preferably provided extending beyond the front part of the probe, one of which is best of a combustible material, for example of paper, the other of a material with a lower melting temperature than the temperature of the measured bath, for example of aluminium or copper.  A radiation filter can be inserted at the front of the internal part in order to permit the passage of only a narrow part of the overall wave ranges of radiation transmitted by the radiation transmitter; furthermore an optical system comprising at least one glass lens and a screen can be used.

The radiation transmitter can also have the shape of a short tube, the front end of which tube at the front part of the probe can be closed by the material of said front part which material has a higher melting point than the molten bath. The external wall of said tube of the radiation transmitter should be protected by a covering part of some material with a lower melting point than the molten bath and also by another covering part of combustible material.  The surface of the front part of the probe facing the radiation transmitter tube can also have the shape of a rotational paraboloid with a reflecting layer, forming a mirror, designed to concentrate the radiation passing to the detector.

The submersible probe according to this invention provides the primary advantage that no precious metals are used, furthermore a high accuracy of measuring requiring no calibration is possible with no skilled attendance and with low manufacturing costs. Other advantages are the wide range of measuring possible, constant values and a long life time of parts of the probe which can be repeatedly used.

Examplary embodiments of submersible probes according to this invention are diagrammatically shown in longitudinal sectional views in the attached drawings wherein:-

Fig.1 is an embodiment of a probe of relatively simple construction;

Fig.2 an embodiment with the possibility of filtration of different radiation lengths using optical systems;

Fig.3 an embodiment utilizing the mirror effect for concentration of the radiation to the detector while using a tube shaped radiation transmitter.

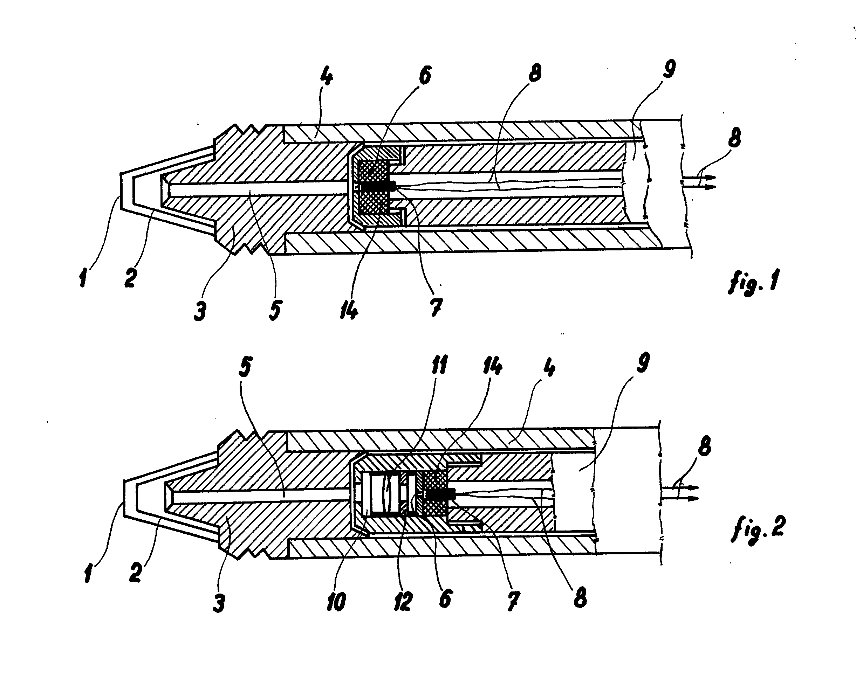

The probe according to the present invention as shown in all the examplary embodiments in Figs.1, 2 and 3 comprises a covering part 1, a covering part 2 and an adjacent radiation transmitter 5. All said parts including a front part 3 of the probe are supported by a supporting tube or mantle 4, into which an internal tubular part 9 is inserted.

Regarding the embodiment shown in Fig.1 a screen 6 with an opening is arranged on the front of the internal part 9 followed by a holder 14 of a radiation detector 7, connected by conductors 8 to an evaluation device (not shown).

Regarding the embodiment shown in Fig.2, a filter 10 allowing passage of only a part of the whole range of radiation, an optical system 11, a screen 12 and an apertured screen 6 are all arranged in the internal part 9, followed by a holder 14 of a detector 7 connected again to conductors 8.

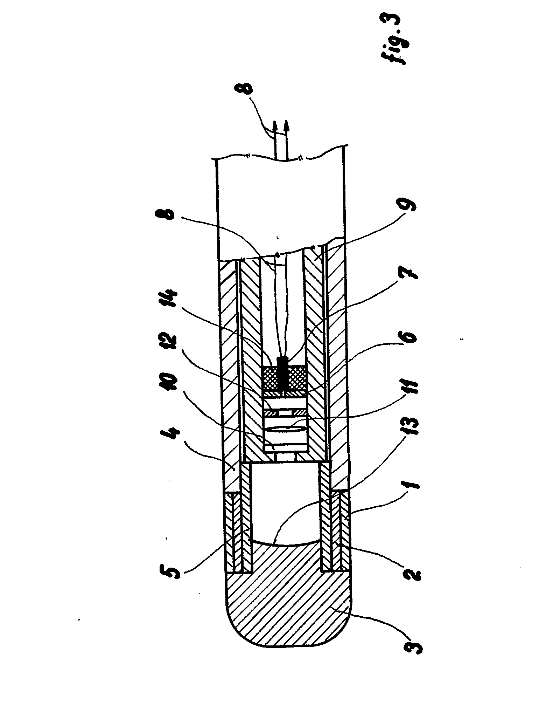

Referring now to the embodiment in Fig.3 a tube shaped radiation transmitter 5 is used, the front end of which, located at the front part 3 of the probe is closed by said front part 3. In Fig.3 also a further alternative arrangement is shown, where the surface of the front part 3 closing the end of the radiation transmitter tube 5 and facing the interior of said tube 5 has the shape of a rotational paraboloid, which surface is covered by an appropriate reflecting material, forming thus a mirror 13 for reflecting the radiation to the detector 7. In this embodiment a filter 10, an optical system 11, a screen 12 and an apertured screen 6 are again provided between the mirror 13 and the detector 7.

To carry out a temperature measurement, the submersible probe is immersed for several seconds in the molten metal, for instance steel and after burning of the external covering part 1 and melting of the subsequent covering part 2 the radiation transmitter 5 starts to transmit the radiation to the detector 7 supported by the holder 14, the form of the transmission for the different embodiments being as follows:

According to Fig.1: - by way of the apertured screen 6 directly to the detector 7 situated in the holder 14.

According to Fig.2: - by way of the filter 10, to the optical system 11, the screen 12 and the apertured screen 6.

According to Fig.3: - by way of the mirror 13 over the filter 10, the optical system 11, the screen 12 and the apertured screen 6.

The signal received by the detector 7 situated in the holder 14 is thereafter fed by way of the conductors 8 to the evaluation device (not shown) which indicate the result of the measurement.

The front part 3 of the probe has to be made of some material capable of withstanding the melting temperature of the melt, advantageously of some ceramic material. The first cover part 1 can be advantageously made of some combustible material, for example paper, while the second cover part 2 beneath said first cover part 1 of a material having a lower melting point than the molten bath can be made for example of aluminium or copper. The supporting mantle 4 can be equally made of some combustible material such as paper or cardboard, possibly also of ceramic material. Where a longer tube of cardboard is used for this supporting mantle 4, this tube can be utilized for inserting the front part of the probe into the molten bath; otherwise some gripping means will be required for this purpose. The front part of the probe has to be immersed into the molten bath for several seconds only, such a period being usually sufficient for the covering means protecting the radiation transmitter to melt or be burnt.

The submersible probe according to this invention can be used for measuring the temperatures of all kinds of melts, particularly of steel melts in the steel and foundry industry.

C L A I M S

1. A submersible probe for a single measurement of the temperature of a both of molten metal covered by a layer of semiliquid or liquid slag comprising a mantle supporting a front part of the probe with an elongated radiation transmitter and with covering means, characterised in that said front part (3) of the probe is connected exchangeably with said supporting mantle (4), said supporting mantle (4) additionally supporting an internal part (9) arranged behind said radiation transmitter (5), said internal part (9) comprising an apertured screen (6) and a holder (14) carrying a detector (7) of radiation, conductors (8) leading from said detector (7) for the transmission of a measured signal to evaluating means.

2. A submersible probe as claimed in claim 1, characterised in that the radiation transmitter (5) comprises a transparent cylindrical body which is dull at least on its cross sectional plane and made of a material capable of withstanding without changes of its optical properties and mechanical damage a sudden change of temperature of up to 2000°C.

3. A submersible probe as claimed in claim 2 characterised in that said cylindrical body is made of molten quartz or heat resistant glass.

4. A submersible probe as claimed in claim 2, characterised in that at least two cover parts (1, 2) are provided extending beyond the front part (3) of the probe, the first (1) of said cover parts being made of combustible material while the second cover part (2) is of a material melting at a lower temperature than the temperature of the measured bath.

5. A submersible probe as claimed in claim 4, characterised in that said first covering part (1) is made of paper while said second covering part (2) is made of aluminium or copper.

6. A submersible probe as claimed in claim 1, characterised in that a filter (10) is provided passing solely a narrow part of the overall wave range of radiation, transmitted by the radiation transmitter (5), and in that an optical system (11) formed by at least one glass lens and with a screen (12) are provided at the front of the internal part (9) of the probe.

7. A submersible probe as claimed in claim 1, characterised in that the radiation transmitter (5) comprises a tubular member, the front end of which tubular member at the front part (3) of the probe being closed by said front part (3), said front part (3) being with a higher melting temperature than the melting temperature of the measured bath, and in that the external wall of said tubular member (5) is protected by a cover part (2) with a lower melting temperature than the melting temperature of the measured bath and by a second cover part (1) of combustible material.

8. A submersible probe as claimed in claim 7, characterised in that the surface of the front part (3) of the probe closing the end of the radiation transmitter tube (5) and facing the interior of said tube (5) has the shape of a rotational paraboloid, covered with reflecting material, to constitute a mirror.

fig.1

fig.2

fig.3